(19) Europäisches Patentamt
European Patent Office
Office européen des brevets

(11) **EP 4 491 317 A1**

(12) **EUROPEAN PATENT APPLICATION**

(43) Date of publication:
**15.01.2025 Bulletin 2025/03**

(21) Application number: **23185117.1**

(22) Date of filing: **12.07.2023**

(51) International Patent Classification (IPC):
**B23K 26/08** (2014.01) **B23K 26/38** (2014.01)
**B23K 26/70** (2014.01) **B23K 37/02** (2006.01)
**B23K 37/04** (2006.01) **F01K 27/02** (2006.01)

(52) Cooperative Patent Classification (CPC):
**B23K 26/702; B23K 26/0876; B23K 26/38;
B23K 26/704; B23K 37/0235; B23K 37/0408**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Bystronic Laser AG
3362 Niederönz (CH)**

(72) Inventors:
• **BERGER, Michael
3005 Bern (CH)**
• **LÜDI, Andreas
3400 Burgdorf (CH)**
• **REYNAUDO, Maxime
3362 Niederönz (CH)**

(74) Representative: **Frei Patent Attorneys
Frei Patentanwaltsbüro AG
Hagenholzstrasse 85
8050 Zürich (CH)**

(54) **FLATBED LASER CUTTING MACHINE WITH AN ENERGY COLLECTION DEVICE**

(57) The present application concerns a flatbed laser cutting machine (1). The flatbed laser cutting machine has a workpiece support (14) defining a horizontal area of support for a workpiece (5). It further comprises a laser cutting head (210) placed above the area of support and equipped to emit a laser cutting beam towards the workpiece (5) supported by the workpiece support (14) and to be moved in horizontal directions relative to the workpiece (5) and the workpiece support (14). Further, it comprises an energy collection device (50) that has a collection structure underneath the area of support and is equipped to collect radiation energy of laser radiation that travels from the laser cutting head (210) without being influenced by the workpiece (5) and/or radiation energy of laser radiation coming from the laser cutting head (210) and reflected by a cutting front surface area. The energy collection device (50) is equipped to recover the radiation energy collected by the collection structure.

Fig. 5

EP 4 491 317 A1

**Description**

The invention is in the field of flatbed laser cutting machines.

Flatbed laser cutting machines comprise a workpiece support that defines a usually horizontal area of support and thereon supports a workpiece, which may for example be a sheet or plate of a material to be cut. The flatbed laser cutting machine further comprises a laser cutting head that is equipped to emit a laser cutting beam having a direction perpendicular to the area of support. The laser cutting head is equipped to move at least in two horizontal dimensions relative to the workpiece support to make the desired cut.

More recently, the need for ever greater laser powers, exceeding, for example by far exceeding, 1 kW seems to be increasing strongly. However, it can be observed that only a small part of the laser light power is actually coupled into the workpiece so as to locally melt or burn workpiece material, i.e., only a small fraction of the energy can actually be used for cutting. The energy efficiency of flatbed laser cutting machines is accordingly very low, and it would be desirable to increase it.

It is an object of the present invention to provide a flatbed laser cutting machine overcoming drawbacks of previous flatbed laser cutting machines. Especially, it is an object of the present invention to provide a flatbed laser cutting machine that has an improved overall energy efficiency if operated at high laser power.

This object is achieved by a flatbed laser cutting machine having a workpiece support defining a horizontal area of support for a workpiece, for example a sheet metal or a metal plate, to lie thereon. The flatbed laser cutting machine further comprises a laser cutting head equipped to emit a laser cutting beam towards a workpiece supported by the workpiece support, for example in a direction essentially perpendicular to the area of support. The laser cutting head is placed above the area of support and is equipped to be moved in horizontal directions, generally with two degrees of freedom (i.e., the laser cutting head can move in x and y directions if the z direction is defined to be the direction of the laser beam). The flatbed laser cutting machine further comprises an energy collection device, the energy collection device having a collection structure placed underneath the area of support and being arranged and equipped to collect radiation energy of laser radiation that travels from the laser cutting head without being influenced by the workpiece and/or radiation energy of laser radiation coming from the laser cutting head and reflected by a cutting front surface area, wherein the energy collection device is equipped to recover the radiation energy collected by the collection structure.

Radiation energy that impinges on the workpiece is either absorbed or reflected by the workpiece. Only absorbed radiation can locally heat the workpiece and contribute to the cutting effect. Many materials to be cut are metals, which often have a high reflectance, whereby the portion of reflected radiation is high. One insight underlying the invention is that, for reasons explained in more detail hereinafter, the majority of the reflected radiation is reflected into a downward direction - the thicker the workpiece, the higher the portion of radiation reflected into the downward direction. Also, the thicker the workpiece is, the closer the direction into which the radiation is reflected is to the vertical. Further, the thicker the workpiece, the smaller the portion of radiation that is absorbed. Moreover, in reality, the speed by which the laser beam moves relative to the workpiece does not correspond to an ideal but is smaller than this so that a portion of the laser radiation does not interact with the workpiece at all but propagates straight downwardly.

The flatbed laser cutting machine as described in this text may be equipped for emitting a laser having a power of at least 1 kW, especially at least 5 kW or at least 10 kW.

High power laser cutting machines are especially used for cutting thick workpieces. Thus, the above insights reveal that for high power laser cutting machines, there will not only be more power, but also the share of the power that is unused and radiated downwardly to below the area of support is higher.

This is what makes a collection structure underneath the area of support especially valuable.

For recovering the collected radiation energy, the energy collection device comprises an according energy recovery installation.

In this, recovering may comprise the conversion, directly or indirectly, of the radiation energy into electrical energy.

As an example of direct conversion, the collection structure may comprise photovoltaic cells and/or a reflector and an energy recovery installation being an arrangement of photovoltaic cells positioned for the radiation reflected by the reflector to impinge on them. In this case, the reflector may for example be equipped for causing diffuse reflection so as to distribute the residual laser radiation energy onto a comparably large area in order to keep the energy density on the surface of the photovoltaic cells within reasonable ranges.

Indirect conversion into electrical energy may comprise causing the radiation energy to impinge on the collection structure (or, if the collection structure comprises a reflector, a structure on which the reflected radiation energy impinges) to heat it up. The heat may then be converted into electrical energy by a thermal engine and a generator or by a thermoelectric converter (thermoelectric generator) device, such as a Peltier element using the Seebeck effect (also called Seebeck generator).

Both, with direct conversion and with indirect conversion, not all heat caused by the radiation can be converted into electrical energy. The remaining heat can optionally be used directly, for heating, warm water production, etc.; this includes the possibility to store the heat in a heat storage for later use. Alternatively, the remaining heat can be dissipated, for example by cooling water, or by a structure having cooling ribs etc.

As an alternative to being used to be converted into electrical energy, the heat may be used directly only, such as for heating, for warm water production, etc.. This includes the possibility to store the heat in a heat storage for later use.

Combinations of all options are possible. In an example, the radiation, via a reflector, firstly impinges on photovoltaic cells. Secondly, the heat generated by the photovoltaic cells and/or heat generated in a secondary collection structure by radiation reflected by the photovoltaic cells and/or heat generated in the reflector can be collected by a recuperator fluid and supplied to an indirect conversion device. Remaining heat that is not converted - but for example builds up in a coolant circuit cooling the indirect conversion device - can be used directly, for heating etc. As another example photovoltaic cells can be arranged peripherally with respect to a the collection structure, wherein the collection structure is equipped to absorb a main part of the radiation, the photovoltaic cells arranged to collect radiation portions that were not absorbed by the collection structure.

Both, with direct and indirect conversion, as well as if the heat is used directly, the energy collection device may be equipped for a recuperator fluid - especially a liquid, thus a cooling liquid - to be in contact with the collection structure. The recuperator fluid may transport the heat away in that the machine may be equipped to convey it from the collection structure. For example, the recuperator fluid may be conveyed to an energy recovery installation, such as an installation for the mentioned indirect conversion into electrical energy. In addition or as an alternative to conveying the cooling to an energy recovery installation, the machine may convey the recuperator fluid to a heat store and/or heat exchanger for direct use of the heat.

In both cases, with and without energy recovery installation, it is an option to use a primary and a secondary recuperator fluid circuit, with a heat exchanger between them. Embodiments with a primary recuperator fluid circuit, with the primary recuperator fluid in contact with the collection structure, and a secondary recuperator fluid circuit, with the secondary recuperator fluid in contact with the energy recovery installation or the heat store or heat exchanger, may especially, but not only, be beneficial in embodiments in which the (primary) recuperator fluid may be subject to contamination.

It is also an option to include a cooling of the laser source itself - and/or of a pumping source in case the laser is optically pumped - in the energy recovery scheme used. For example the recuperator fluid before coming into contact with the collection structure may cool the laser source and/or a pumping source, whereby the recuperator fluid is pre-heated. Especially if a conversion device being a thermal engine is used,

The collection structure will have a physical shape and location making it suitable to collect radiation energy of the laser radiation.

According to a first group of embodiments, the cooling installation, the collection structure extends underneath the area of support to cover a relatively large portion of the area of support, for example essentially the whole area of support. To be precise, this means that a projection of the support structure along the -z-direction (i.e. the opposite of the direction into which the laser beam propagates) onto the area of support covers a large portion of the area of support, for example at least 60%, at least 70%, at least 80% or even at least 90%. In this, the area of support is defined to be the area in the plane on which a workpiece can be placed, which extends horizontally and extends to all places to which the laser beam can travel for cutting in to the workpiece - thus the area that can be worked by the laser cutting beam.

The concept that the collection structure extends underneath the area of support to cover a relatively large portion of the area of support, implies that wherever the laser head is moved to relative to the workpiece, the probability that the radiation that is radiated through the area of support into the -z-direction hits the collection structure is high. Because of the above-mentioned insight that the non-absorbed radiation is primarily radiated straight downwardly, essentially into -z-direction, this ensures that a main portion of the non-absorbed radiation can be collected to protect the machine base.

Examples of embodiments of the first group for example include a vessel with the recuperator fluid. Such vessel may for example be insertable in the machine base and retractable from it. In embodiments it may be constituted by a trolley. Such a vessel underneath the area of support - and if it absorbs radiation also the recuperator fluid itself - belongs to the collection structure. Such configurations are straightforward to implement. However, if the vessel is open on the upper side, cutting waste will aggregate in the vessel, and as a consequence, embodiments with such open vessel require good filtering and frequent exchange of the recuperator fluid.

Further embodiments of the second group include a collection structure that comprises a conveyor hat is equipped to transport cutting waste away from underneath the area of support constantly or intermittently.

In a first sub-group of embodiments, the concepts of a vessel and of a conveyor are combined in that the conveyor is at least partially immersed in the recuperator fluid. Cutting waste, which in most cases has a higher density that usual liquids (such as water) will sink down in the vessel and be collected by the conveyor, whereby it can be conveyed out of the vessel. The recuperator fluid in addition to serving for conveying the heat away also has the effect of preventing any cutting waste fragments that are not solid from coming into direct contact with the conveyor. In other words, cutting waste will, by the recuperator fluid, be cooled sufficiently for being present as solid body when in contact with the conveyor, whereby it is ensured that it does not stick to the conveyor.

In a second sub-group of the first group of embodiments, the conveyor, at positions where it is hit by the non-absorbed radiation, is not immersed in recuperator fluid. Rather, the residual laser radiation, i.e. the laser radiation not absorbed by the workpiece, directly (and/or indirectly, via a reflection) impinges on the conveyor, which is heated up. A recuperator fluid may then be used for transporting the heat away from the conveyor. For example, the conveyor may comprise thermal contact structures in contact with the recuperator fluid. Such thermal contact structures in embodiments are in contact with a bath of the recuperator fluid, in which case no tubing or similar participating in a movement of the conveyor is necessary. In examples, the contact structures may comprise protrusions or the like of the conveyor and a bath of the recuperator fluid into which such protrusions or similar are immersed.

In a second group of embodiments, the collection structure is not necessarily as extended as the working area, but the collection structure is a mobile collection structure and is equipped to cooperate in at least some of the movements of the laser head relative to the area of support.

Especially, the flatbed laser cutting machine may comprise a bridge on which the laser cutting head is mounted and relative to which the laser cutting head may move in a first horizontal dimension (x-dimension). The bridge as a whole is movable relative to the workpiece support in a second horizontal dimension (y-dimension). This is a construction that is per se common for flatbed laser cutting machines. In accordance with embodiments of the second group of embodiments, the collection structure being a mobile collection structure is coupled to the bridge and moves together with the bridge in the y dimension, i.e., in plus and minus y directions.

Especially, in such embodiments, the (mobile) collection structure may comprise a liquid-carrying tube that carries the recuperator fluid. The tube may lie essentially parallel to the x-axis and move with the bridge in the y-dimension.

In embodiments, such a liquid-carrying tube as collection structure has a cross section different from circular, although in other embodiments the cross section is circular. Especially, the cross section may be optimized for cutting waste to not stick relative to the collection structure. It may for example run into an edge on the upper side (thus, a corner in cross section perpendicular to the longitudinal extension of the liquid-carrying tube. In addition or as an alternative, the horizontal dimension in cross section (the y-dimension in the above example, the cross section again being the cross section perpendicular to the longitudinal extension, for example corresponding to a cross section in the y-z plane) may be smaller than the vertical extension.

The collection structure in the above-mentioned embodiments is configured to absorb the residual laser radiation (or at least a large portion thereof) for being converted directly or indirectly into electricity and/or into useable heat. Surface portions of the collection structure may be equipped accordingly, for example by having a chemical composition that favors absorption of radiation of the wavelength of the laser beam, and/or by having an according structure, for example an according roughness. In embodiments in which the radiation also directly impinges on the recuperator fluid, the recuperator fluid may for example be dyed accordingly to absorb the radiation.

In addition or as an alternative to absorbing the unused radiation, the collection structure may comprise reflecting surface portions directing radiation portions to absorbing elements of the energy collection device, for example comprising photosensitive panels. Such absorbing elements may - but do not necessarily need to - be placed below the area of support, too.

Hereinafter, embodiments of the present invention are described in more detail referring to drawings. In the drawings, same reference numbers refer to same or similar components. They show:

| | |
|---|---|
| Fig. 1: | a flatbed laser cutting machine; |
| Fig. 2 | a cross section through the workpiece at the cutting front; |
| Fig. 3 | approximate absorption coefficients of steel for unpolarized light as a function of the angle of incidence; |
| Fig. 4 | a cross section corresponding to the cross section of Fig. 2 for a non-ideal situation; |
| Fig. 5 | a flatbed laser cutting machine with a cooled machine base; |
| Fig. 6 | a trolley of such a laser cutting machine; |
| Fig. 7 | the principle of a belt conveyor immersed in a bath of a recuperator fluid; |
| Fig. 8 | a further embodiment of a belt conveyor with a recuperator fluid bath; |
| Fig. 9 | a variant of the embodiment of Fig. 8; |
| Fig. 10 | a further variant of the embodiment of Fig. 8; |
| Fig. 11 | yet another variant of the embodiment of Fig. 8; |
| Fig. 12 | another embodiment of a flatbed laser cutting machine; |

Figs. 13 - 16    cross sections of liquid-carrying tubes for the embodiment of Fig. 12; and

Fig. 17    an even further embodiment of a flatbed laser cutting machine.

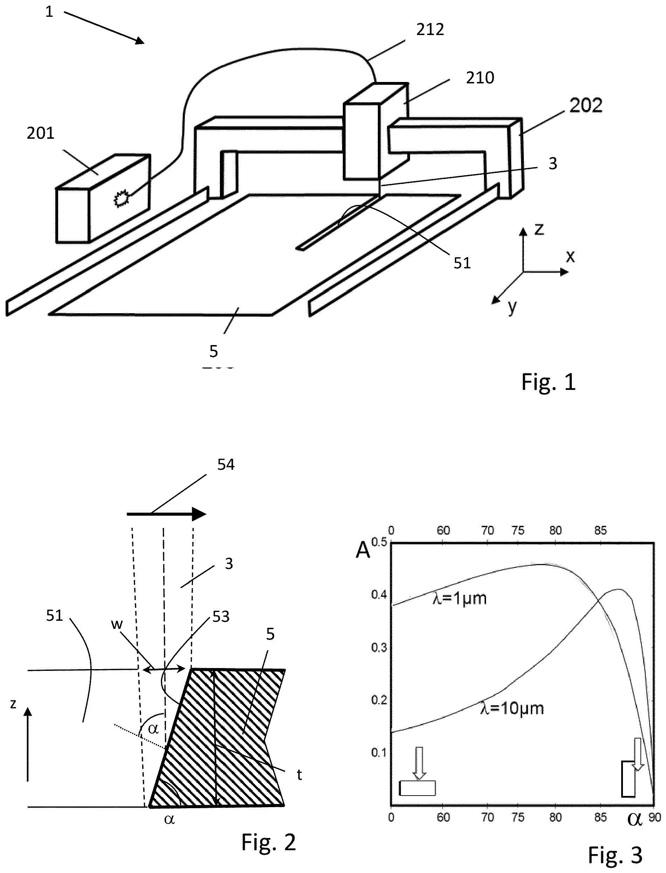

**Figure 1** shows an example of a laser cutting machine 1. The machine comprises a laser source 201, a transport fiber 212, a laser cutting head 210, and a laser processing head moving mechanism. A workpiece 5 is supported by a workpiece support (not shown in Fig. 1). The laser cutting head moving mechanism comprises a bridge 202 relative to which the laser cutting head 210 is movable in the x dimension), and which itself is movable, for example on a pair or rails, in y the y dimension relative to the working table and the workpiece 5. The laser cutting head 210 during operation emits a laser cutting beam 3 in a substantially vertical direction downwards onto the workpiece to cause a cut (kerf 51) when it is moved relative to the latter. The workpiece 5 may be a metal plate that is cut by a laser processing beam emitted by the laser cutting head.

During a laser cutting operation, movements with high velocities and high accelerations have to be made in a machining area both, in x and y dimension. Movements in the y dimension involve moving the entire bridge 202 together with the head.

Even though the laser beam impinges from a direction perpendicular to the area of support (which is defined by the working table and in the depicted embodiment corresponds to the lower surface of the plate-shaped workpiece 5), the angle of incidence is much larger than 0°. **Figure 2** illustrates the cutting front 53 as the laser cutting beam 3 moves in a cutting direction 54 relative to the workpiece 5. As can be seen from Fig. 2, the minimum angle of incidence is

$$\alpha_{min} = \tan^{-1}(t/w),$$

where t is the thickness of the workpiece and w is the width (average diameter) of the laser beam through the workpiece. For relatively thick workpieces - as are usually cut by high-power laser beams - the minimum angle becomes relatively large. For example, for a width w=200 $\mu$m and a thickness t of the workpiece between 2 mm and 20 mm, the minimum angle is between 84° and 89.5°. The maximum angle of incidence is, for geometrical reasons, 90°.

The absorption coefficient is a material property and describes how much light energy can be absorbed by the material. The degree of absorption depends on the angle of incidence, the wavelength and the polarisation, in addition to material properties. **Figure 3** shows the approximate absorption coefficient A of steel for unpolarised (or circularly polarised) light at wavelengths of 1 and 10 $\mu$m as a function of the angle of incidence $\alpha$. Obviously, the degree of absorption at angles of incidence such as those encountered in laser cutting is small, especially at the wavelength of 1 $\mu$m, and it is always less than 40%. Especially with the increasingly powerful lasers, mainly very thick materials are cut, whereby consequently only a small part of the laser power of significantly less than 10% is absorbed. The rest is reflected. According to the law of reflection and given that the cutting front 53 is close to vertical, the non-absorbed laser light shares essentially go downwards.

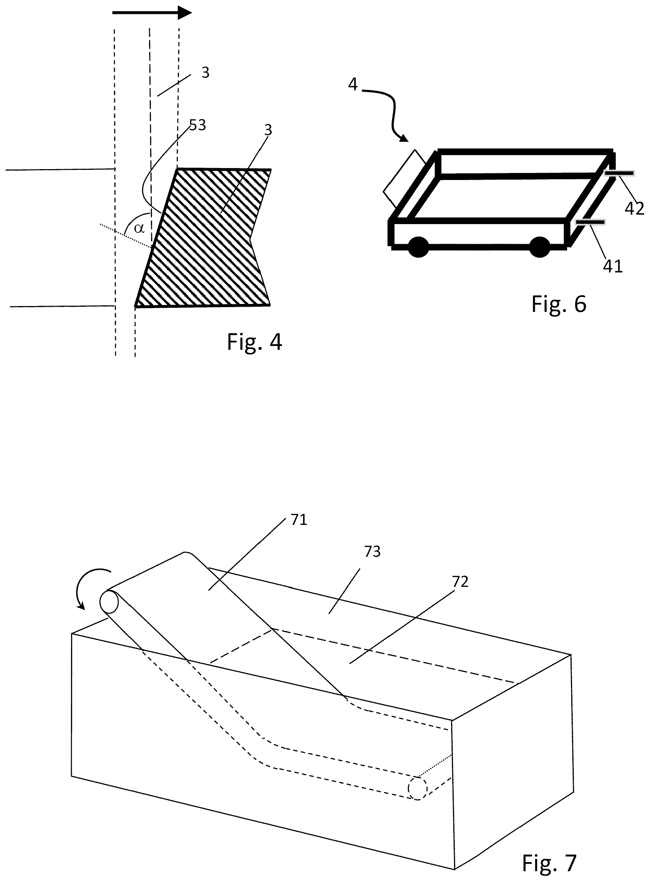

In practice, however, the minimum angle of incidence, which is theoretically optimal will not be encountered. The typical cutting process is much more like the one shown in **Figure 4,** where a share of the laser beam is radiated downwards towards the bottom without interaction with the cutting front 53 and the angle of incidence $\alpha$ is even larger than $\alpha_{min}$. This means that the energy yield available for the separation process is even lower, and that the share of radiation energy radiated downwardly from the area of support is even higher, the direction being vertical (radiation that does not interact with the workpiece) or almost vertical (radiation reflected by the cutting front), thus essentially vertical.

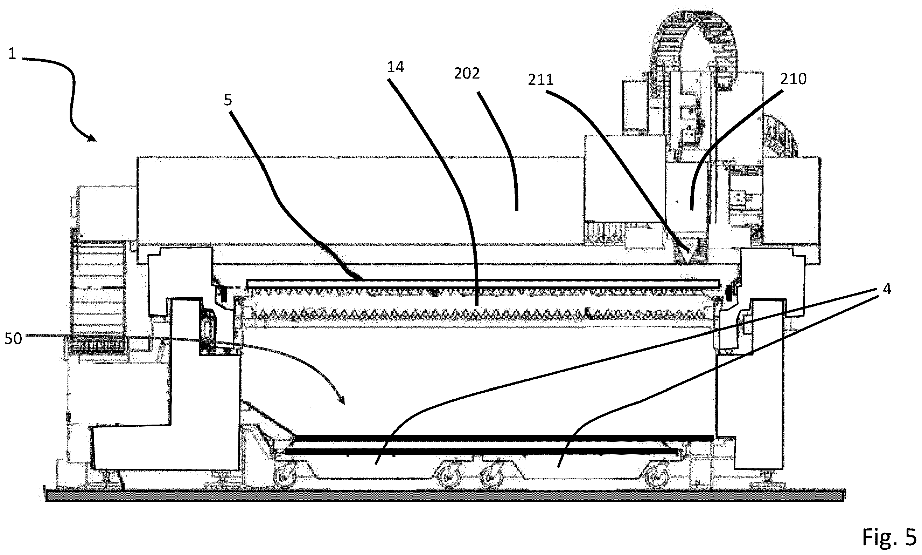

**Figure 5** illustrates a first embodiment of the present invention. The laser cutting machine 1 has an energy collection device 50 at the machine base, for collecting thermal laser energy. The thermal laser energy extracted by the energy collection device can be used beneficially by recovering it directly (as heat directly used for heating or as heat stored in a heat store) or by converting it into electrical energy by means of a conversion device. In addition to the energy gained, the machine base with cooling device has the advantage that the wear of the machine base is significantly lower than is the case with state-of-the-art laser cutting systems. Especially with laser powers of 30 kW and more, the machine base wear is considerable due to the thermal effect of the working laser beam.

In the embodiment of Fig. 5, the energy collection device 50 is connected to the to a heat exchanger, which may in turn be connected to a generator to produce electricity as will be explained in more detail in the following.. Fig. 5 shows a cross-section of a flatbed laser cutting machine of the kind commonly used today for laser cutting of metal sheets.

The workpiece support is formed by a support grid 14. The support grid 14 with the workpiece 5 lies horizontally under the laser processing head 210 here illustrated with a nozzle 211 for ejecting a gas jet onto the position of incidence of the laser beam on the workpiece 5. The machine base below the support grid comprises mobile trolleys 4 into which the cutting waste falls. The unused laser power is absorbed by the machine base with the trolleys 4. As schematically illustrated in **Figure 6,** the trolleys are, in accordance with the illustrated embodiment, part of the energy collection device and can be provided with recuperator fluid. The trolleys 4 to this end each form a vessel for the recuperator fluid and comprise an inlet 41 and an outlet 42 for the vessel, each of which is fluidly connected to a tube.

During operation, a for example constant flow of the recuperator fluid, especially water, ensures that the heat generated by absorption of the radiation by the trolleys is collected, transported away and can be used. The recuperator fluid can flow in an open system or in a closed recuperator fluid circuit. If the heat is needed to generate electricity, the tubes can be routed to a heat exchanger, which in turn is connected to a generator to produce electricity. The electrical energy generated can be stored in a battery or fed directly back into the grid or into the power supply of the machine.

In embodiments with trolleys forming the machine base, the recuperator fluid flowing through the trolleys, the tubes supplying them with recuperator fluid and discharging the recuperator fluid need to be long and flexible enough to allow for the trolleys to be removed regularly because the trolleys will collect cutting waste that has to be disposed of in regular intervals. For example, the machine may comprise drums for the tubes, for neatly storing away excess tube portions.

In a further group of embodiments, the machine base of the laser machine is equipped with a conveyor belt for conveying away the cutting waste and cutting dust. Conveyor belts have the advantage over trolleys that the cutting waste does not have to be emptied manually.

Figure 7 schematically illustrates a machine with a belt conveyor for conveying the cutting waste out of the vessel that comprises the recuperator fluid 72. A conveyor belt 71 with for example metallic segments is partially immersed in a bath of the recuperator fluid 72. During operation of the laser cutting machine and/or between operating cycles, the conveyor belt may be activated to convey debris (cutting waste) out of the vessel 73 that holds the bath of the recuperator fluid 72 and that is placed underneath the area of support, constituting the machine base or a part thereof. As in the embodiment of Figs. 5 and 6 the thermal energy transported by the recuperator fluid can e.g. be used to generate electricity. The recuperator fluid can be routed to a heat exchanger, which in turn is connected to a generator to produce electricity. The electrical energy generated can be stored in a battery or fed directly back into the grid or into the power supply of the machine.

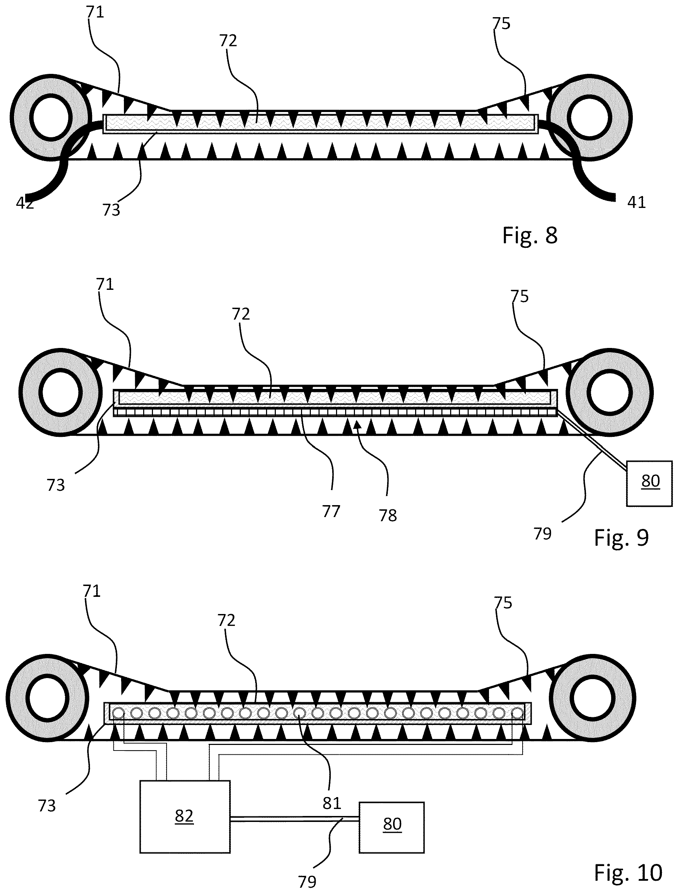

An even further embodiment is described referring to Figure 8. The machine comprises a belt conveyor. The conveyor belt 71 cooled by the recuperator fluid is shown in cross-section in Fig. 8. The conveyor belt 71 is only cooled from below by the recuperator fluid 72, in that cooling fins 75 the conveyor belt 71 has on an inner side are driven through the recuperator fluid held by the vessel 73. In this way, the conveyor belt 71 is well cooled, however, the cutting waste does not fall into the recuperator fluid (for example water). A recuperator fluid inlet 41 and a recuperator fluid outlet 42 may ensure constant cooling of the conveyor belt and removal of the heat for use similarly to the above-described embodiments

The embodiment illustrated referring to Fig. 8 has the additional advantage that the cutting waste is prevented from falling into the recuperator fluid bath. The machine may comprise a casing that effectively shields the bath from any waste, dust etc. This is in contrast to the embodiment of Fig. 7, where the recuperator fluid may, depending on the materials cut, become heavily contaminated over time, and the cooling-liquid-dust mixture may contaminate all parts of the machine that come into contact with it.

Figure 9 illustrates an even further variant. Similarly to the embodiment of Fig. 8, the conveyor belt 71 will again give off heat to the recuperator fluid 72 at it's side facing away from the workpiece support formed by the support grid 14 (see Fig. 5), for example assisted by cooling fins 75, whereby the recuperator fluid 72 does not come into contact with cutting waste. The recuperator fluid 72 is contained in a recuperator fluid vessel 73, which has a bottom that is a good heat conductor - for example, at least the bottom of the vessel 73 may be of a sheet metal or other relatively thin material with good heat conducting properties. Directly below the vessel 73, and in thermal contact with it, a flat arrangement 78 of thermoelectric converters in the form of Peltier elements 77 (in the present texts, elements that use the so-called Seebeck effect for transforming heat into electrical energy are called "Peltier elements") is provided. The vessel 73 constitutes the high-temperature side of the Peltier elements 77, whereas a cooling structure (not shown in Fig. 9) constitutes the low-temperature side. The Peltier elements serve to convert the thermal energy absorbed by the recuperator fluid into electrical energy. The electrical energy is fed into a power storage device 80 by means of an electrical line 79. Instead of being stored in a power storage device 80, the electrical energy may be fed directly to the grid and/or be directly re-used by the laser cutting machine or other installation.

The portion of the thermal energy that cannot be converted into electrical energy may optionally be used also. For example, the cooling structure of the low-temperature side of the Peltier elements 77 may comprise a liquid cooling, wherein the heat absorbed by the according cooling liquid (different from the recuperator fluid) may be used in the manner described hereinbefore, for example for heating purposes, for regenerating the cold side of a heat pump installation, etc.

More in general, the invention covers any possibility of using thermal energy collected underneath the area of support (especially underneath the workpiece support or even collected by the workpiece support), including any possibility of converting the thermal energy into electrical energy (meaning the conversion of the thermal energy into electrical energy within the physical and practical limits, with the option of also using the unavoidable waste heat that is collected on the cold side of a conversion installation).

Figure 10 shows a variant of the embodiments according to Figs. 8 and 9. A meandering line 81 for a secondary recuperator fluid is arranged in the vessel 73, via which thermal energy is extracted from the recuperator fluid 72 in the vessel 73. The meandering line 81 is connected to a generator unit 82 in which electrical energy is generated from the thermal energy fed in, e.g. via a steam turbine. This electrical energy is fed into an power storage device 80 by means of the electrical line 79. Instead of the power storage device 80, a direct grid connection can also be provided for feeding the electrical energy into the grid. The power storage device 80 can be connected to the power supply of the laser cutting system and deliver energy to it.

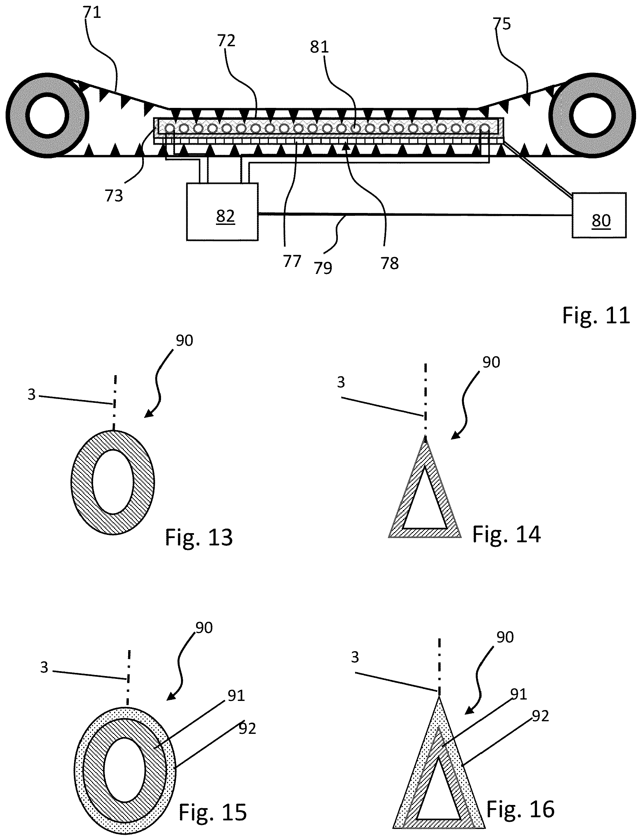

**Figure 11** shows a further variant which combines the concepts of the embodiments described referring to Figs. 8, 9 and 10, i.e., electrical energy can be generated both by means of Peltier elements 77 and by means of a generator 82. In Fig. 11, the line 81 for the secondary recuperator fluid is arranged on the high temperature side of the Peltier elements 77, thus the Peltier elements 77 and the generator 82 are fed by heat in parallel. It would be possible also to have a serial arrangement, in which the secondary recuperator fluid that feeds heat to the generator 82 is used to cool the low temperature side of the Peltier elements 77, and/or in which the low temperature side of the generator 82 (to be precise: of the thermal engine of the generator) is cooled via Peltier elements. In practice, the arrangement can be optimized based on the best working temperatures of the components involved.

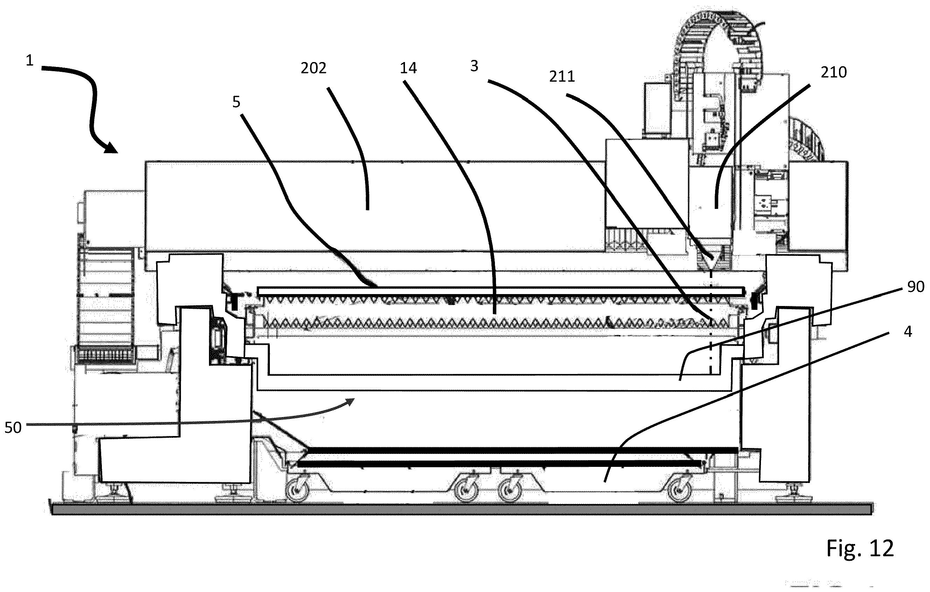

A further embodiment is shown in **Figure 12.** The bridge 202 (see also Figs. 1, 5) is coupled to a mobile collection structure in the form of a liquid-carrying tube 90.

A cross-section of the liquid-carrying tube 90 is shown in **Figure 13.** The laser radiation 3 that radiates downwards unused, is collected by the liquid-carrying tube 90 and thereby generates heat. The shape of the liquid-carrying tube 90 can be oval/elliptical so that cut-outs, falling parts and cutting waste do not stick but can fall to the bottom. **Figure 14** shows an alternative shape of the liquid-carrying tube 90, namely triangular.

**Figures 15 and 16** depict variants of the embodiments of Figs. 13 and 14, respectively, in which the liquid-carrying tube 90 comprises a body 91 of a first material and, at least on its upper side, a coating 92 of a second material different from the first material. The first material in this may be a good heat conductor and/or a comparably ductile material that minimizes the probability of pipe breaks. Example of suitable first materials are copper, aluminum, steel, etc. The second material may be a highly heat resistant material, such as ceramics.

Underneath the mobile collection structure, the laser cutting machine can be equipped with a conveyor belt or with trolleys 4 for collecting and removing the cutting waste.

The variant with a recuperator-fluid-carrying tube moving with the bridge has the advantage that the heat-absorbing unit is closer to the laser cutting head 210, so that more energy can be absorbed and there is less risk of damage if waste falls from the cutting table. The total area of the system is also smaller as the liquid-carrying tube follows the bridge movement. This makes it easier to bring the recuperator fluid to a high temperature, whereby a thermal engine or other electricity generating device can have a higher efficiency, since the Carnot efficiency setting an upper limit to the achievable efficiency depends on the temperature difference between the high temperature side and the low temperature side. Also, there is no direct contact between the recuperator fluid 72 on the one hand and the cutting waste on the other hand, despite the fact that essentially all residual radiation (see the explanations hereinbefore) hits the energy collection structure.

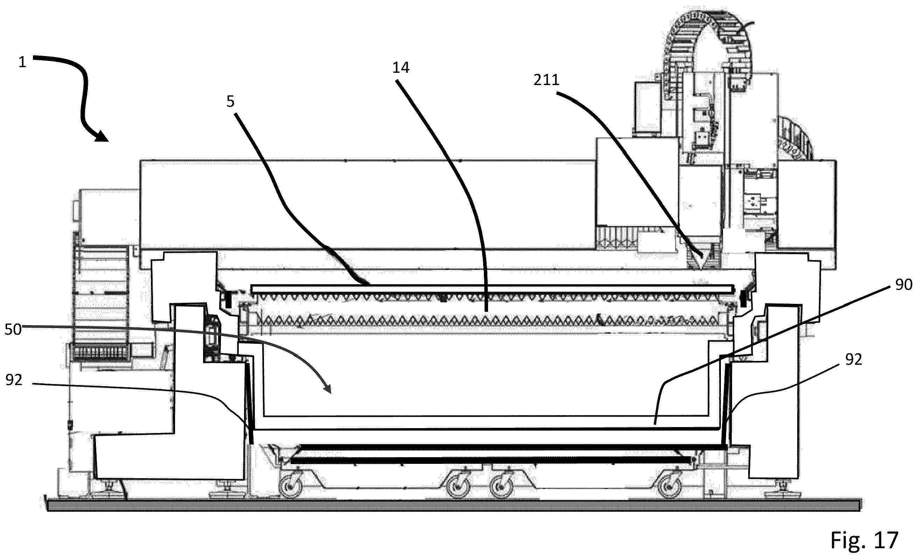

**Figure 17** shows an embodiment that is similar to the embodiment of Fig. 12 with a liquid-carrying tube 90 as a mobile collection structure. In contrast to the latter, the laser cutting machine in addition has photosensitive panels 92 arranged to receive radiation that is reflected, especially diffusely reflected, by a surface of the (mobile) collection structure.

Embodiments of the kind shown in Fig. 17, which include the direct conversion of unused laser radiation into electrical energy, advantageously have a structure that distributes the unused laser radiation over a large area so that the intensity at the location of conversion, in Fig. 17 on the photosensitive panels 92 is not too high. This may for example be achieved by designing the surface of the collection structure so that any reflection is diffuse, by locally making reflecting surface portions concave or convex, etc. By doing so, a destruction or damaging of the photosensitive panels 92 can be avoided.

Embodiments including the direct conversion of unused laser radiation into electrical energy, may further incorporate measures for preventing the photosensitive panel from being sprayed by cutting material. For example, screens may be placed laterally underneath the working area that there is no direct path from the position of incidence of the laser beam on the workpiece on the one hand and the photosensitive surface of the photosensitive panel on the other hand so that only reflected radiation reaches the photosensitive surface.

**Claims**

1.    A flatbed laser cutting machine (1), having a workpiece support defining a horizontal area of support for a workpiece (5), the flatbed laser cutting machine further comprising a laser cutting head (210) placed above the area of support and equipped to emit a laser cutting beam (3) towards a workpiece supported by the workpiece support and to be moved in horizontal directions relative to the workpiece (5) and the workpiece support, **characterized by** an energy collection device , the energy collection device comprising a collection structure underneath the area of support and equipped to collect radiation energy of laser radiation that travels from the laser cutting head without being influenced by the workpiece and/or radiation energy of laser radiation coming from the laser cutting head and reflected by a cutting front surface area (53), wherein the energy collection device is equipped to recover the radiation energy collected by the collection structure.

2. The flatbed laser cutting machine of claim 1, wherein the energy collection device is equipped for a recuperator fluid to be in contact with the collection structure.

3. The flatbed laser cutting machine of claim 2, wherein the flatbed laser cutting machine is equipped to convey the recuperator fluid from the cooling structure to an energy recovery installation, and/or wherein the flatbed laser cutting machine comprises an energy recovery installation in contact with the recuperator fluid.

4. The flatbed laser cutting machine of claim 3, wherein the energy recovery installation comprises a heat engine for converting collected heat into mechanical energy and a generator for converting the mechanical energy into electrical energy.

5. The flatbed laser cutting machine of claim 3 or 4, wherein the energy recovery installation comprises a thermoelectric converter.

6. The flatbed laser cutting machine of any one of claims 2-5, comprising a vessel (73) for the recuperator fluid, the vessel (73) being underneath the area of support.

7. The flatbed laser cutting machine of any one of claims 2-6, and comprising a belt conveyor constituting at least a part of the collection structure, the belt conveyor being equipped for conveying cutting waste away of a region underneath the area of support.

8. The flatbed laser cutting machine of claim 7, wherein an upper surface of the conveyor belt (71) is out of contact with the recuperator fluid, and wherein the conveyor belt (71) comprises thermal contact structures in thermal contact with the recuperator fluid.

9. The flatbed laser cutting machine of any one of the previous claims, further comprising a secondary recuperator fluid circuit, with a heat exchanger between the recuperator fluid and a secondary recuperator fluid of the secondary recuperator fluid circuit.

10. The flatbed laser cutting machine of any one of the previous claims, wherein the collection structure comprises a mobile collection structure, the mobile collection structure being coupled to the laser coupling head to join in movements of the laser cutting head.

11. The flatbed laser cutting machine of claim 10, comprising a bridge on which the laser cutting head (210) is mounted and relative to which the laser cutting head is movable in a first horizontal dimension (x), the bridge being movable relative to the workpiece support in a second horizontal dimension (y) different from the first horizontal direction, wherein the mobile collection structure is movable in the second horizontal dimension (y) together with the bridge (202).

12. The flatbed laser cutting machine of claim 10 or 11, wherein the mobile collection structure comprises a liquid-carrying tube (90) for the recuperator fluid.

13. The flatbed laser cutting machine of claim 12, wherein the liquid-carrying tube has a cross section different from circular, wherein at least one of the following conditions holds: the cross section is pointed towards the upper side; in cross section the horizontal dimension is smaller than the vertical dimension.

14. The flatbed laser cutting machine of any one of the previous claims, wherein the energy collection device comprises photovoltaic cells.

Fig. 1

Fig. 2

Fig. 3

Fig. 4

Fig. 6

Fig. 7

Fig. 5

Fig. 8

Fig. 9

Fig. 10

Fig. 11

Fig. 13

Fig. 14

Fig. 15

Fig. 16

EP 4 491 317 A1

Fig. 12

EP 4 491 317 A1

Fig. 17

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 2016 034649 A (AMADA HOLDINGS CO LTD) 17 March 2016 (2016-03-17) * abstract; claims; figures * ----- | 1-14 | INV. B23K26/08 B23K26/38 B23K26/70 B23K37/02 B23K37/04 F01K27/02 |
| Y | US 2015/224601 A1 (M. MITRA) 13 August 2015 (2015-08-13) * paragraphs [0059] - [0063]; claims; figures * ----- | 1-14 | |
| Y | US 2021/379696 A1 (S. ITO ET AL) 9 December 2021 (2021-12-09) * paragraphs [0041], [0042]; figures * ----- | 7,8 | |
| Y | US 2019/022799 A1 (T. DÖHLER) 24 January 2019 (2019-01-24) * paragraph [0027] * ----- | 9 | |
| A | JP H02 142696 A (MITSUBISHI HEAVY IND LTD) 31 May 1990 (1990-05-31) * abstract; claims; figures * ----- | 1-14 | |

**TECHNICAL FIELDS SEARCHED (IPC)**

B23K
F22G
F01K

The present search report has been drawn up for all claims

| Place of search | Date of completion of the search | Examiner |
|---|---|---|
| Munich | 21 December 2023 | Jeggy, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 5117

This annex lists the patent family members relating to the patent documents cited in the above-mentioned European search report.
The members are as contained in the European Patent Office EDP file on
The European Patent Office is in no way liable for these particulars which are merely given for the purpose of information.

21−12−2023

| Patent document cited in search report | | Publication date | Patent family member(s) | | Publication date |
|---|---|---|---|---|---|
| JP 2016034649 | A | 17−03−2016 | JP | 6397685 B2 | 26−09−2018 |
| | | | JP | 2016034649 A | 17−03−2016 |
| US 2015224601 | A1 | 13−08−2015 | CN | 104619457 A | 13−05−2015 |
| | | | DE | 102012106937 A1 | 30−01−2014 |
| | | | EP | 2879834 A1 | 10−06−2015 |
| | | | KR | 20150033706 A | 01−04−2015 |
| | | | RU | 2015106997 A | 20−09−2016 |
| | | | US | 2015224601 A1 | 13−08−2015 |
| | | | WO | 2014019814 A1 | 06−02−2014 |
| US 2021379696 | A1 | 09−12−2021 | EP | 3862126 A1 | 11−08−2021 |
| | | | JP | 6654266 B1 | 26−02−2020 |
| | | | JP | 2020059060 A | 16−04−2020 |
| | | | US | 2021379696 A1 | 09−12−2021 |
| | | | WO | 2020071232 A1 | 09−04−2020 |
| US 2019022799 | A1 | 24−01−2019 | CN | 109278286 A | 29−01−2019 |
| | | | CN | 114393825 A | 26−04−2022 |
| | | | EP | 3431263 A1 | 23−01−2019 |
| | | | JP | 6541134 B2 | 10−07−2019 |
| | | | JP | 6849737 B2 | 31−03−2021 |
| | | | JP | 2019023338 A | 14−02−2019 |
| | | | JP | 2019194022 A | 07−11−2019 |
| | | | US | 2019022799 A1 | 24−01−2019 |
| | | | US | 2021039202 A1 | 11−02−2021 |
| JP H02142696 | A | 31−05−1990 | NONE | | |

EPO FORM P0459

For more details about this annex : see Official Journal of the European Patent Office, No. 12/82